# EUROPEAN PATENT SPECIFICATION

(11) **EP 3 638 589 B1**
(45) Date of publication and mention of the grant of the patent: **28.04.2021**
(21) Application number: 18732910.7
(22) Date of filing: 04.06.2018
(51) Int. Cl.: B65B 23/20, B25J 9/00, B65B 59/04, B65B 43/18, B25J 15/00, B25J 15/06, B65B 59/00, B65B 51/02, B65B 5/00

(54) **METHOD FOR PACKAGING CERAMIC SLABS**
VERFAHREN ZUM VERPACKEN VON KERAMISCHEN PLATTEN
PROCÉDÉ D'EMBALLAGE POUR PLAQUES DE CÉRAMIQUE

(30) Priority: 14.06.2017 IT 201700065721
(43) Date of publication of application: 22.04.2020
(73) Proprietor: Granitifiandre Societa' Per Azioni, 42014 Castellarano (RE) (IT)
(72) Inventor: MARCHI, Domenico, 42031 Baiso (IT)
(74) Representative: Corradini, Corrado
(86) International application number: PCT/IB2018/053966
(87) International publication number: WO 2018/229591

(56) References cited:
- WO-A1-2008/038081
- WO-A1-2016/055876
- CN-A- 106 184 876
- DE-A1- 10 147 361
- US-A- 5 085 030

## Description

### Field of the invention

The present invention relates to a packing method for ceramic slabs, in particular for ceramic slabs of a square or rectangular shape.

### Background

As is known, at the exit of ceramic slab production lines, a packing station is generally present, in which the ceramic slabs are enclosed into a special packing, mainly in order to protect them during the later shipping, handling and storage steps Such a packaging station is known from WO 2016/055876 A1.

The type of packing normally depends on the size of the ceramic slabs exiting from the production line.

For ceramic slabs of large size, the packing step may provide, for example, for placing the ceramic slabs directly on a transportable supporting element, such as a crate, a pallet or a rack, which can optionally be stabilized by one or more wrappings of stretch film for packing.

For ceramic slabs of smaller size, it is instead usual to package the ceramic slabs, individually or after being grouped into stacks of mutually overlapping slabs, within a frame or box obtained by folding a blank of cardboard or other suitable material around the same to make a protective casing.

From the foregoing, therefore, it is apparent that the machinery and equipment used for implementing the packing stations are currently very different depending on the ceramic slab format that the production line is able to make.

Recently, however, very flexible production lines have been introduced which, starting from a large ceramic semi-finished product, for example from a fired ceramic slab having dimensions up to 1500x3200 mm and over, are equipped to divide said ceramic semi-finished product by a cutting process, providing finished ceramic slabs in output of any size required by the production batch.

It is therefore clear that, in order to effectively pack all these ceramic slabs, a production line such as that outlined above must be currently provided with a plurality of different from each other packing stations, with a consequent increase in installation costs as well as the spaces occupied in the factories.

### Summary of the invention

An object of the present invention is to solve this prior art drawback by providing a packing method for ceramic slabs which allows making different types of packing depending on the format of the ceramic slabs exiting from the production line, in an extremely flexible and efficient manner.

Another object of the present invention is to achieve the above object with a simple and rational solution and relatively cost-effective.

These and other objects are achieved with the features of the invention set out in the independent claim. The dependent claims describe instead preferred and/or particularly advantageous aspects of the invention.

The present invention provides a method for packing ceramic slabs according to claim 1.

The advantages of this method allow the creation of multiple different types of packing, by selecting them each time, for example according to the ceramic slab format advancing on the conveyor.

According to another aspect of the method, the forming of the protective casing may involve using the robot equipped with the packaging head for:
- picking a blank from a blank storage area,
- bringing the blank at the ceramic slab or the stack of ceramic slabs on the conveyor,
- folding flaps of the blank around the ceramic slab or the stack of ceramic slabs.

This solution provides a simple and rational solution to make the protective casing directly around the ceramic slab and/or the stack of ceramic slabs.

In particular, the folding of the blank may involve using the robot equipped with the packaging head for:
- folding two first flaps of the blank around two opposite sides of the ceramic slab or the stack of ceramic slabs,
- applying an adhesive at the ends of said first folded flaps of the blank,
- folding two second flaps of the blank around two further opposite sides of the ceramic slabs or the stack of ceramic slabs, by at least partially overlapping said second flaps at the ends of the first flaps provided with adhesive.

This solution allows closing and fixing the protective casing around the ceramic slab and/or the stack of ceramic slabs.

In this context, the step of applying adhesive may involve using the robot equipped with the packaging head for transferring the ceramic slab or the stack of ceramic slabs wrapped by the first folded flaps of the blank from the conveyor to a glueing station provided with means for applying the adhesive. This aspect of the invention allows carrying out the glueing step without interfering with other apparatuses of the packing station.

According to a different aspect of the invention, the method may finally comprise the steps of:
- arranging a transportable supporting element, such as a crate (wood, cardboard or other material), a pallet or a rack, in a loading area, and
- using the robot equipped with the handling head to pick up the ceramic slab or the stack of ceramic slabs from the conveyor and transfer it onto said supporting element.

This aspect of the invention allows packing the ceramic slabs directly on the supporting element arranged in the loading area, which can optionally be stabilized by one or more wrappings of stretch film and subsequently used to carry the above ceramic slabs towards a storage warehouse or other operational areas.

### Brief description of the drawings

Further features and advantages of the invention will become apparent from the following description, provided by way of non-limiting example with the aid of the figures shown in the accompanying drawings.
Figure 1 shows a schematic plan view of the layout of a packing station according to the present invention.
Figure 2 shows a lateral view of the robot present in the packing station in figure 1, equipped with the packaging head schematically shown.
Figure 3 shows a schematic lateral view of the handling head that can be coupled to the robot in figure 2 in place of the packaging head.
Figure 4 shows a schematic plan view of the packaging head.
Figures 5 and 6 show two orthogonal projections of the view in figure 4.
Figures 7a-7d replicate the view in figure 6 during as many operating steps of the packaging head.

### Detailed description

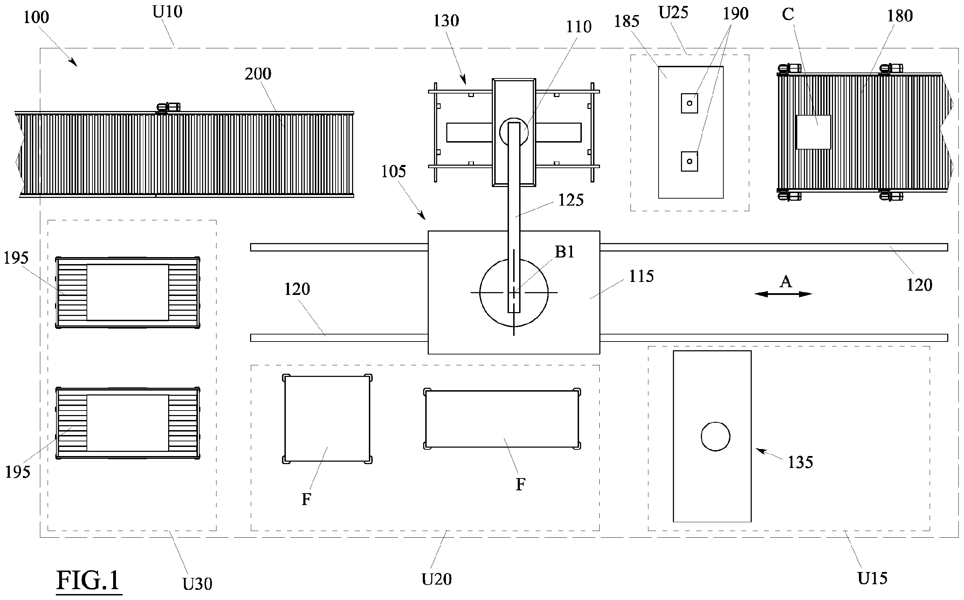

The packing station 100 firstly includes a robot 105, which generally comprises a terminal 110 and a set of handling members adapted to move terminal 110 within a work space U10 which is indicated by the dotted line in figure 1.

It should be noted right away that, within the work space U10, the handling means of robot 105 are preferably adapted to move terminal 110 also in vertical direction so that terminal 110 is globally adapted to move in a three-dimensional space.

In the example shown, the handling members of robot 105 comprise a cart 115, which is adapted to move back and forth along a predetermined horizontal and straight sliding direction A, for example sliding on a pair of parallel guide rails 120, driven by appropriate motor members (not shown).

An articulated arm 125 is installed on cart 115, which has a first end fastened to cart 115 and a second free end carrying terminal 110.

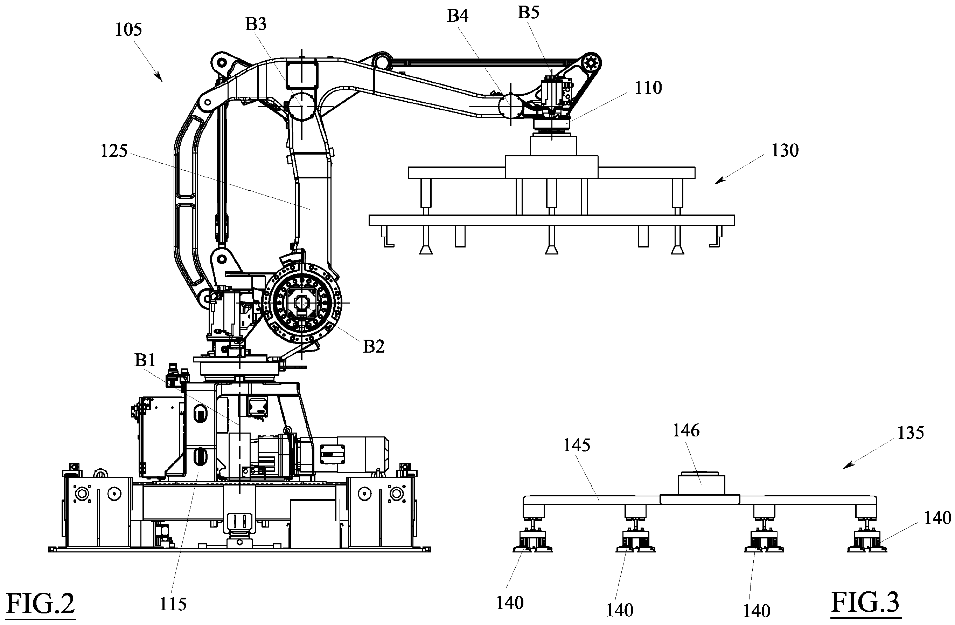

As better shown in figure 2, the first end of the articulated arm 125 may be hinged to cart 115 so as to rotate thereon about a vertical articulation axis B1, which is orthogonal to the sliding direction A of cart 115.

In an intermediate position between the first and the second end, the articulated arm 125 may comprise one or more intermediate hinges adapted to define as many horizontal articulation axes.

In the example shown, the articulated arm 125 for example comprises three intermediate hinges, whose horizontal articulation axes are indicated with references B2, B3 and B4, respectively.

Finally, terminal 110 may be hinged to the second end of the articulated arm 125 according to an articulation axis B5 orthogonal to the articulation axes of the intermediate hinge(s), so as to be arranged vertically as needed.

The movements of the articulated arm 125 around the various articulation axes B1-B5 are driven by dedicated motors, which are not further described as conventional per se.

Of course, in some embodiments, the articulated arm 125 might have a different number of articulation axes and/or a different arrangement thereof. Moreover, other embodiments may provide that the articulated arm 125 is not mounted on cart 115, but on a fixed platform. In yet other embodiments, instead of the articulated arm 125 and/or cart 115, the handling means of terminal 110 may comprise a Cartesian system.

Terminal 110 is provided with engagement means, preferably quick engagement means, allowing it to firmly engage with a plurality of operating heads that are accommodated in a dedicated tooling area U15 contained within the work space U10.

These operating heads include at least one packaging head 130 (shown engaged with robot 105 in figure 1 and 2) and a handling head 135 (shown at rest in the work space U15 in figure 1 and figure 3), in which the handling head 135 is constructively different from the packaging head 130 to perform different functions.

In particular, the handling head 135 is constructed to directly grip at least one ceramic slab C, where the wording "directly grip" generically means that the handling head 135 is adapted to couple and hold the ceramic slab as is, i.e. without the use of intermediate members.

To this end, the handling head 135 is generally provided with gripping means adapted to directly interact with the ceramic slab C to achieve a coupling with the latter which constrains the ceramic slab C to the handling head 135.

In the example shown, these gripping means include comprise a plurality of adhesion members 140, such as a plurality of suction cups optionally connected to a vacuum source, which substantially lie on a same plane in order to simultaneously support on and adhere to one of the flat sides of the ceramic slab C.

The adhesion members 140 may be mounted on board a bearing frame 145, for example generally flat in shape, which is provided with engagement means 146 to terminal 110 of robot 105.

Preferably, the adhesion members 140 are associated to the bearing frame 145 through the interposition of means, such as cursors sliding into corresponding guides, which are adapted to change the position and the mutual distance thereof on the common lying plane, according to the size and shape of the ceramic slab C to be gripped.

This displacement of the adhesion members 140 may occur automatically through appropriate motorized driving members, which are not described in detail as conventional per se.

Going to the packaging head 130, this head is constructed to form, around a ceramic slab C and/or a stack of ceramic slabs C, a protective casing, for example shaped as a box or as a perimeter frame, which can be obtained starting from a blank or a flat sheet F of cardboard, paper or any other material generally thin and flexible that can be refolded to form a casing, such as polyurethane or other polymeric and/or composite materials.

To carry out this function, the packaging head 130 generally comprises gripping means adapted to grip blank F and folding means adapted to fold flaps of blank F, when held by the gripping means, around the ceramic slab C or the stack of ceramic slabs C.

In the example shown, the gripping means comprise a plurality of adhesion members 150, such as a plurality of suction cups optionally connected to a vacuum source, which substantially lie on a same plane in order to simultaneously support on and adhere to one of the flat sides of blank F.

The adhesion members 150 may be mounted on board a bearing frame 155, for example generally flat in shape, which is provided with engagement means 156 to terminal 110 of robot 105.

Preferably, the adhesion members 150 are associated to the bearing frame 155 through the interposition of means, such as cursors sliding within corresponding guides, which are adapted to change the position and the mutual distance thereof on the common lying plane, according to the size and shape of blank F to be gripped.

Moreover, the adhesion members 150 are preferably associated with the bearing frame 155 through the further interposition of driving members 157, such as hydraulic or pneumatic pistons, which are adapted to change the position thereof along a direction substantially orthogonal with respect to the common lying plane.

As regards the folding means, these means may comprise a plurality of brackets, for example substantially "L" shaped, which are essentially mutually coplanar and are ideally arranged along the sides of an imaginary rectangle adapted to contain the ceramic slab or the stack of ceramic slabs to be treated.

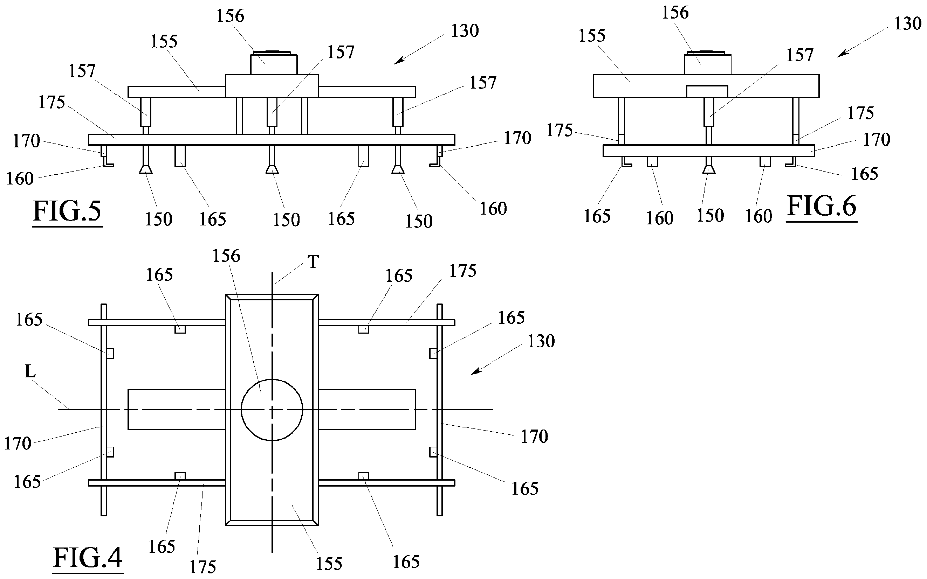

As shown in figure 4, this plurality of brackets may comprise two first groups of brackets 160, which are aligned along two opposite sides of said imaginary rectangle parallel to a transverse axis T, and two second groups of brackets 165, which are aligned along the remaining two opposite sides of said imaginary rectangle parallel to a longitudinal axis L orthogonal to the transverse axis T.

In order to vary the size of said imaginary rectangle, the two groups of brackets 160 are preferably associated with bearing means adapted to allow a mutual approach/distancing movement thereof in a direction parallel to the longitudinal axis L, while the two groups of brackets 165 are preferably associated with bearing means adapted to allow a mutual approach/distancing movement thereof in a direction parallel to the transverse axis T.

For example, brackets 160 may be attached to two first crossbeams 170 arranged parallel to the transverse axis T while brackets 165 may be attached to two second crossbeams 175 arranged parallel to the longitudinal axis L and connected with the bearing frame 155, in which suitable connecting members between the parts, such as suitable cursors sliding into corresponding guides, allow the first crossbeams 170 to slide on the second crossbeams 175 along the longitudinal axis L and the second crossbeams 175 to slide on the first crossbeams 170 and with respect to the bearing frame 155 along the transverse axis T.

In addition, it is preferable that the mutual distance between the single brackets 160 and 165 of each group is also adjustable, which can be obtained for example by attaching the brackets to the crossbeams by the interposition of further sliding cursors that allow each bracket 160 and 165 to slide along the respective crossbeam 170 and 175.

The mutual approach/distancing movement of the first groups of brackets 160 and of the second groups of brackets 165, as well as any changes in the distance between brackets 160 and 165 of each group can occur automatically through dedicated motorized driving members, which are not described herein as conventional per se.

Going back to the layout shown in figure 1, the packing station 100 may comprise a conveyor 180, which is adapted to advance single ceramic slabs and/or stacks of mutually overlapping ceramic slabs C, for example coming from a production line up to make them go inside work space U10 of robot 105.

The stacks of ceramic slabs C may be made by suitable stacking devices arranged upstream of conveyor 180, which are not shown as conventional per se.

In general, conveyor 180 may be any device adapted to define a supporting plane on which the ceramic slabs C and/or the stacks of ceramic slabs C may advance.

In the example shown, conveyor 180 is a motorized roller platform but in other embodiments, it may be a conveyor belt or any other device suitable for the purpose.

Within work space U10, the packing station 100 further comprises a storage area U20 which accommodates blanks F intended to make the protective casing, which may be mutually overlapping to form at least one stack.

In the example shown, the storage area U20 contains two stacks of blanks F, in which blanks F of each stack have different shapes and sizes in order to wrap a ceramic slab C or a stack of ceramic slabs C of different formats.

It is not excluded, however, that in other embodiments, the storage area U20 may contain a single stack of blanks F and/or more stacks of blanks F having the same format and/or more than two stacks of blanks F, each containing blanks of different format.

The packing station 100 further comprises a glueing area U25, contained within work space U10 of robot 105, in which means 185 are provided, adapted to apply an adhesive on folded flaps of blank F in order to fix the protective casing around the ceramic slab C or the stack of ceramic slabs C. In the example shown, means 185 may comprise two dispensing members 190 which are connected to an adhesive feeding system (not shown) and are facing upwards, so as to apply said adhesive on the flaps of blank F that are made to slide thereon.

Preferably, the dispensing members 190 are associated with the handling means adapted to allow a mutual approach/distancing thereof, according to the dimensions of blank F.

Within work space U10, the packing station 100 also comprises a loading area U30, which is adapted to receive one or more supporting elements 195 for ceramic slabs C.

Each of these supporting elements 195 may be for example a crate (of wood, cardboard or other material), a pallet (such as wood or metal), a rack or in general any transportable structure capable of receiving and supporting one or more ceramic slabs C, in particular large ceramic slabs, for example in order to allow further transport and/or storage thereof in a warehouse.

Finally, in some embodiments, the packing station 100 may comprise a further conveyor 200, which is adapted to remove from work space U10 the packaged ceramic slabs C and/or the stacks of ceramic slabs C at the end of the packing process.

In general, conveyor 200 may be any device adapted to define a supporting plane on which the ceramic slabs C and/or the stacks of ceramic slabs C may advance.

In the example shown, conveyor 200 is a motorized roller platform but in other embodiments, it may be a conveyor belt or any other device suitable for the purpose.

Based on the foregoing, the operation of the packing station 100 is substantially as follows.

Conveyor 180 advances the ceramic slabs C and/or the stacks of ceramic slabs C in a sequence towards work space U10 of robot 105, where the same can be temporarily stopped.

Depending on the type of ceramic slab C or stack of ceramic slabs C, the packing station 100 may be configured or reconfigured to perform a different type of packing.

If conveyor 180 brings inside work space U10 a ceramic slab C or a stack of ceramic slabs V for example having a large size, the packing station 100 may be simply configured to transfer such a ceramic slab C or stack of ceramic slabs C from conveyor 180 to one of the supporting elements 195 arranged in the loading area U30.

To do so, robot 105 brings its terminal 110 within the tooling area U15 and engages the handling head 135, optionally after releasing the packaging head 130.

At this point, robot 105 picks up the handling head 135 from the tooling area U15 and brings it to operate at the ceramic slab C located on conveyor 180.

By means of the adhesion members 140, the handling head 135 grips the ceramic slab C which, due to a subsequent movement of robot 105, is transferred within the loading area U30 where it is released on a corresponding supporting element 195.

When the supporting element 195 is loaded, the same may be removed from work space U10, for example through appropriate automatic guide carts (not shown), to be optionally replaced by another empty supporting element 195. The supporting element 195 removed from work space U10 may be stored awaiting transportation or it may optionally be brought to other operational stations, such as to a station where the ceramic slabs C loaded thereon are stabilized by means of one or more wrappings of a stretch film for packing. Otherwise, if conveyor 180 brings inside work space U10 a ceramic slab C or a stack of ceramic slabs C for example having a smaller size, the packing station 100 may be configured to wrap said ceramic slab C or said stack of ceramic slabs C with a blank F to make a protective casing.

In this case, robot 105 brings its terminal 110 within the tooling area U15 and engages the packaging head 130, optionally after releasing the handling head 135.

At this point, robot 105 picks up the packaging head 130 from the tooling area U15 and brings it at a stack of blanks F within the storage area U20.

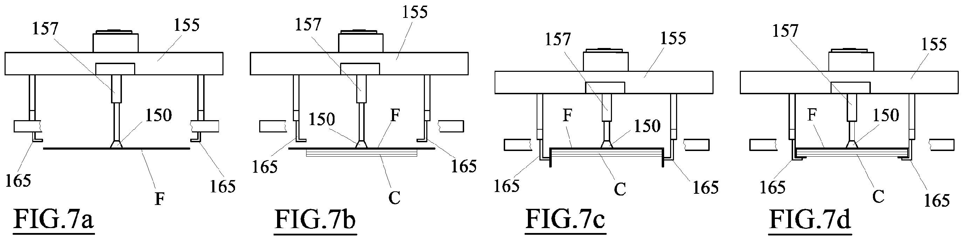

By means of the adhesion members 150, the packaging head 130 grips the first blank F of the stack and then carries it, by the movement of robot 105, at the ceramic slab C or the stack of ceramic slabs C located on conveyor 180. As shown in figures 7a-7d, blank F is placed on the top surface of the ceramic slab C or the stack of ceramic slabs C so that its lateral flaps project or protrude with respect to the peripheral edges of the ceramic slab C or stack of ceramic slabs C.

Thereafter, brackets 165 are brought closer together in the direction of the transverse axis T so as to go on top of two of said protruding flaps of blank F, after which the packaging head 130 is lowered, while the adhesion members 150 are moved upwards, so that brackets 165 fold the underlying flaps of blank F along the edges of the ceramic slab C or stack of ceramic slabs C (see fig. 7c).

At this point, brackets 165 are further approached to each other in the direction of the transverse axis T so as to fold the flaps of blank F below the ceramic slab C or the stack of ceramic slabs C supporting them resting on brackets 165 themselves.

Once this first folding step of blank F has ended, robot 105 moves the packaging head 130 so as to lift the ceramic slab C or the stack of ceramic slabs C from conveyor 180 and bring it at the glueing area U25, where the coordinated movement of the packaging head 130 above means 185 allows applying the adhesive at the end of the flaps of blank F refolded underneath the ceramic slab C or stack of ceramic slabs C.

Once the glue has been applied, the operations previously carried out by brackets 165 are similarly carried out by brackets 160, so as to refold also the second pair of flaps of the blank underneath the ceramic plate C or the stack of ceramic slabs C.

In this way, these flaps overlap and are glued to the previous ones at the edges of the ceramic slab C or stack of ceramic slabs C, thereby fixing the so obtained protective casing.

At this point, robot 105 can carry the packaging head 130 at conveyor 200, where the packaged ceramic slab C or stack of ceramic slabs C may be released to be moved away from work space U10.

In some embodiments, along conveyor 200 there may be further operational stations arranged, including for example a strapping machine to further stabilize the package.

Other embodiments may provide that, instead of conveyor 200, the packaged ceramic slab C or the stack of ceramic slabs C is released directly to one of the supporting elements 195 or anyway in any other point of work space U10. All operation and operational steps described above can be performed automatically by an electronic control unit (not shown) that controls the operation of robot 105.

In particular, the choice between using the packaging head 130 and the handling head 135 can be made by the electronic control unit on the basis of a preset work program or through suitable sensors, such as optical sensors, adapted to recognize the size of the ceramic slabs C or the stacks of ceramic slabs C that are fed sequentially within work space U10.

Of course, a man skilled in the art may make several technical application changes to the above description, without thereby departing from the scope of the invention as claimed hereinafter.

## Claims

1. A method for packing ceramic slabs (C) by means of a packing station (100), wherein the packing station (100) comprises:
- a conveyor (180) adapted to support and advance a ceramic slab (C) or a stack of ceramic slabs (C),
- a packaging head (130) adapted to form a protective casing around the ceramic slab (C) or the stack of ceramic slabs (C),
- a handling head (135) adapted to directly grip the ceramic slab (C) or the stack of ceramic slabs (C),
- a tooling area (U15) adapted to receive the packaging head (130) and the handling head (135),
- a robot (105) adapted to selectively pick up the packaging head (130) or the handling head (135) from the tooling area (U15) and bring it to operate at the ceramic slab (C) or the stack of ceramic slabs (C) on the conveyor (180),
and wherein the method provides for performing a first activity, if the conveyor (180) brings inside a work space (U10) a ceramic slab (C) or a stack of ceramic slabs (C) of a first type, and a second activity, if the conveyor (180) brings inside the work space (U10) a ceramic slab (C) or a stack of ceramic slabs (C) of a second type,
the first activity including the steps of:
- controlling the robot (105) to pick up the handling head (135) from the tooling area (U15) and bring it to operate at the ceramic slab (C) or the stack of ceramic slabs (C) on the conveyor (180),
- using the robot (105) equipped with the handling head (135) to directly grip the ceramic slab (C) or the stack of ceramic slabs (C), and
- transferring the ceramic slab (C) or the stack of ceramic slabs (C) to a supporting element (195)
the second activity including the steps of:
- controlling the robot (105) to pick up the packaging head (130) from the tooling area (U15) and bring it to operate at the ceramic slab (C) or the stack of ceramic slabs (C) on the conveyor (180),
- using the robot (105) equipped with the packaging head (130) to form a protective casing around the ceramic slab (C) or the stack of ceramic slabs (C).

2. A method according to claim 1, wherein the forming of the protective casing involves the use of the robot (105) equipped with the packaging head (130) for:
- picking a blank (F) from a blank storage area (U20),
- bringing the blank (F) at the ceramic slab (C) or the stack of ceramic slabs (C) on the conveyor (180),
- folding flaps of the blank (F) around the ceramic slab (C) or the stack of ceramic slabs (C).

3. A method according to claim 2, wherein the folding of the flaps of the blank (F) involves the use of the robot (105) equipped with the packaging head (130) for:
- folding two first flaps of the blank (F) around two opposite sides of the ceramic slab (C) or the stack of ceramic slabs (C),
- applying an adhesive at the ends of said first folded flaps of the blank (F),
- folding two second flaps of the blank around two further opposite sides of the ceramic slabs (C) or the stack of ceramic slabs (C), by at least partially overlapping said second flaps at the ends of the first flaps provided with adhesive.

4. A method according to claim 3, wherein the step of applying adhesive involves using the robot (105) equipped with the packaging head (130) for transferring the ceramic slab (C) or the stack of ceramic slabs (C) wrapped by the first folded flaps of the blank (F) from the conveyor (180) to a glueing station (U25) provided with means (185) for applying the adhesive.

5. A method according to any one of the preceding claims, wherein the first activity comprises the steps of:
- arranging a transportable supporting element (195) in a loading area (U30),
- using the robot (105) equipped with the handling head (135) to pick up the ceramic slab (C) or the stack of ceramic slabs (C) from the conveyor (180) and transfer it onto said supporting element (195).

6. A method according to claim 5, wherein the supporting element (195) is selected from the group consisting of: a crate, a pallet and a rack.

7. A method according to any of the preceding claims, wherein the handling head (135) comprises one or more suction cups for directly gripping the ceramic slab (C) or the stack of ceramic slabs (C).

8. A method according to any of the preceding claims, wherein the ceramic slab or slabs of the second type has/have a smaller size than the ceramic slab or slabs of the first type.

## Patentansprüche

1. Verfahren zum Verpacken von Keramikplatten (C) mittels einer Verpackungsstation (100), wobei die Verpackungsstation (100) Folgendes umfasst:
- einen Förderer (180), der angepasst ist, um eine Keramikplatte (C) oder einen Stapel von Keramikplatten (C) zu tragen und vorwärts zu befördern,
- einen Verpackungskopf (130), der angepasst ist, um eine Schutzhülle um die Keramikplatte (C) oder den Stapel von Keramikplatten (C) zu bilden,
- einem Handling-Kopf (135), der angepasst ist, um die Keramikplatte (C) oder den Stapel von Keramikplatten (C) direkt zu greifen,
- einen Werkzeugbereich (U15), der angepasst ist, um den Verpackungskopf (130) und den Handling-Kopf (135) aufzunehmen,
- einen Roboter (105), der angepasst ist, um den Verpackungskopf (130) oder den Handling-Kopf (135) selektiv aus dem Werkzeugbereich (U15) aufzunehmen und ihn zum Betrieb an der Keramikplatte (C) oder dem Stapel von Keramikplatten (C) an dem Förderer (180) zu bringen,
und wobei das Verfahren ein Ausführen einer ersten Aktivität, wenn der Förderer (180) eine Keramikplatte (C) oder einen Stapel von Keramikplatten (C) eines ersten Typs in einen Arbeitsraum (U10) bringt, und einer zweiten Aktivität, wenn der Förderer (180) eine Keramikplatte (C) oder einen Stapel von Keramikplatten (C) eines zweiten Typs in den Arbeitsraum (U10) bringt, bereitstellt,
wobei die erste Aktivität die folgenden Schritte beinhaltet:
- Steuern des Roboters (105), um den Handling-Kopf (135) aus dem Werkzeugbereich (U15) aufzunehmen und ihn zum Betrieb an der Keramikplatte (C) oder dem Stapel von Keramikplatten (C) an dem Förderer (180) zu bringen,
- Verwenden des Roboters (105), der mit dem Handling-Kopf (135) ausgerüstet ist, um die Keramikplatte (C) oder den Stapel von Keramikplatten (C) direkt zu greifen, und
- Übertragen der Keramikplatte (C) oder des Stapels von Keramikplatten (C) zu einem Trägerelement (195),
wobei die zweite Aktivität die folgenden Schritte beinhaltet:
- Steuern des Roboters (105), um den Verpackungskopf (130) aus dem Werkzeugbereich (U15) aufzunehmen und ihn zum Betrieb an der Keramikplatte (C) oder dem Stapel von Keramikplatten (C) an dem Förderer (180) zu bringen,
- Verwenden des Roboters (105), der mit dem Verpackungskopf (130) ausgerüstet ist, um eine Schutzhülle um die Keramikplatte (C) oder den Stapel von Keramikplatten (C) zu bilden.

2. Verfahren nach Anspruch 1, wobei das Bilden der Schutzhülle die Verwendung des mit dem Verpackungskopf (130) ausgerüsteten Roboters (105) involviert, um:
- einen Rohling (F) aus einem Rohlingspeicherbereich (U20) aufzunehmen,
- den Rohling (F) an die Keramikplatte (C) oder den Stapel von Keramikplatten (C) an dem Förderer (180) zu bringen,
- Laschen des Rohlings (F) um die Keramikplatte (C) oder den Stapel von Keramikplatten (C) zu falten.

3. Verfahren nach Anspruch 2, wobei das Falten der Laschen des Rohlings (F) die Verwendung des mit dem Verpackungskopf (130) ausgerüsteten Roboters (105) involviert, um:
- zwei erste Laschen des Rohlings (F) um zwei gegenüberliegende Seiten der Keramikplatte (C) oder des Stapels von Keramikplatten (C) zu falten,
- einen Klebstoff an den Enden der ersten gefalteten Laschen des Rohlings (F) aufzutragen,
- zwei zweite Laschen des Rohlings um zwei weitere gegenüberliegende Seiten der Keramikplatten (C) oder des Stapels von Keramikplatten (C) zu falten, indem die zweiten Laschen an den Enden der mit Klebstoff versehenen ersten Klappen mindesten teilweise überlappen.

4. Verfahren nach Anspruch 3, wobei der Schritt eines Auftragens von Klebstoff ein Verwenden des Roboters (105), der mit dem Verpackungskopf (130) ausgerüstet ist, zum Übertragen der Keramikplatte (C) oder des Stapels von Keramikplatten (C), die von den ersten gefalteten Laschen des Rohlings (F) umhüllt sind, von dem Förderer (180) zu einer Klebestation (U25), die mit Einrichtungen (185) zum Auftragen des Klebstoffs versehen ist, involviert.

5. Verfahren nach einem der vorherigen Ansprüche, wobei die erste Aktivität die folgenden Schritte umfasst:
- Anordnen eines transportierbaren Trägerelements (195) in einem Ladebereich (U30),
- Verwenden des Roboters (105), der mit dem Handling-Kopf (135) ausgerüstet ist, um die Keramikplatte (C) oder den Stapel von Keramikplatten (C) von dem Förderer (180) aufzunehmen und sie/ihn auf das Trägerelement (195) zu übertragen.

6. Verfahren nach Anspruch 5, wobei das Trägerelement (195) ausgewählt ist aus der Gruppe bestehend aus: einer Kiste, einer Palette und einem Gestell.

7. Verfahren nach einem der vorherigen Ansprüche, wobei der Handling-Kopf (135) einen oder mehrere Saugnäpfe zum direkten Greifen der Keramikplatte (C) oder des Stapels von Keramikplatten (C) umfasst.

8. Verfahren nach einem der vorherigen Ansprüche, wobei die Keramikplatte oder die Keramikplatten des zweiten Typs eine kleinere Größe als die keramische Platte oder die keramischen Platten des ersten Typs aufweist/aufweisen.

## Revendications

1. Procédé de conditionnement de dalles en céramique (C) au moyen d'une station de conditionnement (100), dans lequel la station de conditionnement (100) comprend :
- un convoyeur (180) adapté pour porter et déplacer une dalle en céramique (C) ou une pile de dalles en céramique (C).
- une tête de conditionnement (130) adaptée pour former un carter de protection autour de la dalle en céramique (C) ou de la pile de dalles en céramique (C).
- une tête de préhension (135) adaptée pour agripper directement la dalle en céramique (C) ou la pile de dalles en céramique (C).
- une zone d'outillage (U15) adaptée pour recevoir la tête de conditionnement (130) et la tête de préhension (135).
- un robot (105) adapté pour prendre la tête de conditionnement (130) ou la tête de préhension (135) de manière sélective de la zone d'outillage (U15) et l'amener à opérer au niveau de la dalle en céramique (C) ou de la pile de dalles en céramique (C) sur le convoyeur (180),
et dans lequel le procédé permet de mener une première activité, si le convoyeur (180) déplace à l'intérieur d'un espace de travail (U10) une dalle en céramique (C) ou une pile de dalles en céramique (C) d'un premier type, et une seconde activité, si le convoyeur (180) déplace à l'intérieur de l'espace de travail (U10) une dalle en céramique (C) ou une pile de dalles en céramique (C) d'un second type,
la première activité comprenant les étapes consistant à :
- contrôler le robot (105) pour déplacer la tête de préhension (135) de la zone d'outillage (U15) et l'amener à opérer au niveau de la dalle en céramique (C) ou de la pile de dalles en céramique (C) sur le convoyeur (180),
- utiliser le robot (105) équipé de la tête de préhension (135) pour agripper directement la dalle en céramique (C) ou la pile de dalles en céramique (C), et
- transférer la dalle en céramique (C) ou la pile de dalles en céramique (C) vers un élément d'appui (195),
la deuxième activité comprenant les étapes consistant à :
- contrôler le robot (105) pour déplacer la tête de conditionnement (130) de la zone d'outillage (U15) et l'amener à opérer au niveau de la dalle en céramique (C) ou de la pile de dalles en céramique (C) sur le convoyeur (180),
- utiliser le robot (105) équipé de la tête de conditionnement (130) pour former un carter de protection autour de la dalle en céramique (C) ou de la pile de dalles en céramique (C).

2. Procédé selon la revendication 1, dans lequel la formation du carter de protection comprend l'utilisation du robot (105) équipé de la tête de conditionnement (130) pour :
- prélever une pièce (F) d'une zone de stockage vierge (U20).
- amener la pièce (F) au niveau de la dalle en céramique (C) ou de la pile de dalles en céramique (C) sur le convoyeur (180).
- plier les rabats de la pièce (F) autour de la dalle en céramique (C) ou de la pile de dalles en céramique (C).

3. Procédé selon la revendication 2, dans lequel le pliage des rabats de la pièce (F) nécessite l'utilisation du robot (105) équipé de la tête de conditionnement (130) pour :
- plier les deux premiers rabats de la pièce (F) autour de deux côtés opposés de la dalle en céramique (C) ou de la pile de dalles en céramique (C),
- appliquer un adhésif aux extrémités desdits premiers rabats pliés de la pièce (F),
- plier deux seconds rabats de la pièce autour de deux autres côtés opposés des dalles en céramique (C) ou de la pile de dalles en céramique (C), en entraînant un chevauchement au moins partiel desdits seconds rabats aux extrémités des premiers rabats pourvus d'adhésif.

4. Procédé selon la revendication 3, dans lequel l'étape d'application de l'adhésif implique l'utilisation du robot (105) équipé de la tête de conditionnement (130) pour transférer la dalle en céramique (C) ou la pile de dalles en céramique (C) conditionnée par le premier rabat plié de la pièce (F) du convoyeur (180) à une station de collage (U25) dotée de moyens (185) pour appliquer l'adhésif.

5. Procédé selon l'une quelconque des revendications précédentes, dans lequel la première activité comprend les étapes consistant à :
- disposer un élément d'appui transportable (195) dans une zone de chargement (U30),
- utiliser le robot (105) équipé de la tête de préhension (135) pour agripper la dalle en céramique (C) ou la pile de dalles en céramique (C) du convoyeur (180) et de la transférer vers ledit élément d'appui (195).

6. Procédé selon la revendication 5, dans lequel l'élément d'appui (195) est choisi dans le groupe constitué d'une caisse, d'une palette et d'une étagère.

7. Procédé selon l'une quelconque des revendications précédentes, dans lequel la tête de préhension (135) comprend une ou plusieurs ventouses permettant d'agripper directement la dalle en céramique (C) ou la pile de dalles en céramique (C).

8. Procédé selon l'une quelconque des revendications précédentes, dans lequel la ou les dalle(s) en céramique du second type a/ont une taille inférieure à la ou les dalle(s) en céramique du premier type.
